# EUROPEAN PATENT SPECIFICATION

(11) **EP 2 858 484 B1**
(45) Date of publication and mention of the grant of the patent: **27.04.2016**
(21) Application number: 13747873.1
(22) Date of filing: 06.06.2013
(51) Int. Cl.: A01K 31/12, A01M 1/22, A01M 29/28

(54) **PERCH FOR POULTRY**
STÜTZE FÜR GEFLÜGEL
PERCHOIR POUR VOLAILLE

(30) Priority: 08.06.2012 NL 2008973
(43) Date of publication of application: 15.04.2015
(73) Proprietor: Van de Ven Beheer B.V., 5521 DZ Eersel (NL)
(72) Inventor: VAN DE VEN, Dick Hendrikus Cornelis, NL-5521 NB Eersel (NL)
(74) Representative: Verhees, Godefridus Josephus Maria
(86) International application number: PCT/NL2013/050405
(87) International publication number: WO 2013/184001

(56) References cited:
- DE-A1- 19 544 117
- DE-B- 1 018 670
- US-A- 4 471 561

## Description

### Field of the invention

The invention relates to a perch for poultry, comprising two elongated electrical conductors for combating bird mite, which perch is provided with an elongated sitting area for the poultry to sit on, as well as adjoining boundary areas which the poultry can reach with their beaks, and a mounting face by which the perch can be fitted to a support or wall, and which conductors have a non-insulated side and are spaced apart and parallel to each other.

Bird mites mainly live on bird blood and are 0.6 - 1.2 mm in length and colorless to reddish. The bird mites often live in vast numbers in birds' living quarters such as - birds' nests - bird cages - poultry farms - pigeon cotes - aviaries etc. They are somewhat shy and during the day they hide in all sorts of hidden spaces such as seams, slits, interstices and behind insulation boards. During the night they come out of their hiding places to fetch their meal of blood from the birds. So they are not carried along by the birds; the birds are merely used as their food source. In case of serious annoyance this is very irritating for breeding hen-birds and this will often cause them to leave their nests. Young birds can die of loss of blood.

Bird mites can be the cause of anaemia with brooding hens. Emaciated animals, low egg production and low resistance to infections belong to the symptoms. The hens also become restless owing to the bird mites and their feathers may become roughened. This may degrade into feather plucking and cannibalism. It is also possible for blood spots to arise on the eggs in that the eggs roll over the bird mites. This is highly undesirable.

### State of the art

A device of this type is known from DE19544117A. The support of this known device is arranged as a flexible tape that can be fitted to any arbitrary object. The electrical conductors are flat with an insulation layer being located on part of the top side so that the chance of people or animals stepping on it and coming into contact with the non-insulated part of the conductors is reduced considerably.

### Summary of the invention

It is an object of the invention to provide a device of the type defined in the opening paragraph where the damaging effects of the presence of bird mites is considerably reduced or even completely prevented and bird mites can be combated in an effective and less labor-intensive manner. To this end the device according to the invention is characterized in that the electrical conductors are located between the mounting face and the adjoining boundary areas and close to these boundary areas and extend along the entire boundary edge of the boundary areas and thus enclose the sitting area and the adjoining boundary areas. During the night the chickens are mainly seated on a perch. In order to avoid bird mites coming close to the animals it is thus particularly advantageous to protect the perches from bird mites. This can be effected in an effective way by providing the path the bird mite is to take to the sitting area of the perch with electrical conductors at a suitable place such that the bird mites always have to cross this path to arrive at the perch. The most suitable place for this is situated along the boundary areas. If bird mites settle themselves on the sitting area or the accessible adjoining boundary areas, they will be eaten by the chickens. By mounting the electrical conductors right beside the boundary areas, there will be no suitable place left within the area bounded by the conductors for the bird mites to be used as a nocturnal shelter or breeding ground for bird mites and thus the bird mites are to pass the electrical conductors.

The electrical conductors are preferably located as close to the boundary areas as possible from the point of view of construction engineering. In an advantageous embodiment the distance between the boundary areas and the electrical conductors is smaller than half the width of the sitting area. This distance is preferably smaller than a quarter of the width of the sitting area.

A further advantageous embodiment of the perch according to the invention is characterized in that the electrical conductors are present with their non-insulated side facing downwards, so that the killed bird mites drop off the perch even better. In addition, this strongly reduces the chance that the animals sitting on the perch come into contact with the non-insulated side of the conductors.

A still further advantageous embodiment of the device according to the invention is characterized in that the non-insulated side of the electrical conductors is flat. As a result, the killed bird mites can easily drop off the conductors and the conductors can be cleaned properly.

Again a further advantageous embodiment of the device according to the invention is characterized in that the electrical conductors are embedded in a support, so that the non-insulated sides of the conductors seamlessly connect with the sides of the adjoining parts of the support. In consequence, when the device according to the invention is used, no new breeding grounds for the bird mites are created and the killed bird mites drop off the conductors even more easily and the device can be cleaned even better.

The electrical conductors preferably each comprise an elongated metal wire in a plastic sheath, preferably silicon rubber, with inside it particles of electrically conductive material such as, for example, graphite, silver, stainless steel. The use of plastic, notably silicon rubber, makes a seamless connection possible between support and conductors. The metal conductors are needed to keep the resistance in longitudinal direction low. With this construction there is only one transition of material. Spots where there is material transition are generally common breeding grounds for bird mites. Since this material transition is seamless in the construction of the device according to the invention, there are no places left that can function as breeding grounds for bird mites. Moreover, this material is fire and spark-resistant.

### Brief description of the drawing figures

The invention will be further described below in more detail with reference to an example of embodiment of the perch according to the invention represented in the drawing figures, in which:
Fig. 1 shows a perspective view of a part of a first embodiment of the perch according to the invention;
Fig. 2 shows a cross-sectional view of the perch shown in Fig. 1;
Fig. 3 shows a sectional view of the support with electrical conductors of the perch shown in Fig. 1;
Fig. 4 shows a perspective view of a part of a second embodiment of the perch according to the invention;
Fig. 5 shows a longitudinal section of the perch shown in Fig. 4;
Fig. 6 shows a perspective view of a part of a third embodiment of the perch according to the invention; and
Fig. 7 shows a longitudinal section of the perch shown in Fig. 6.

### Detailed description of the drawing figures

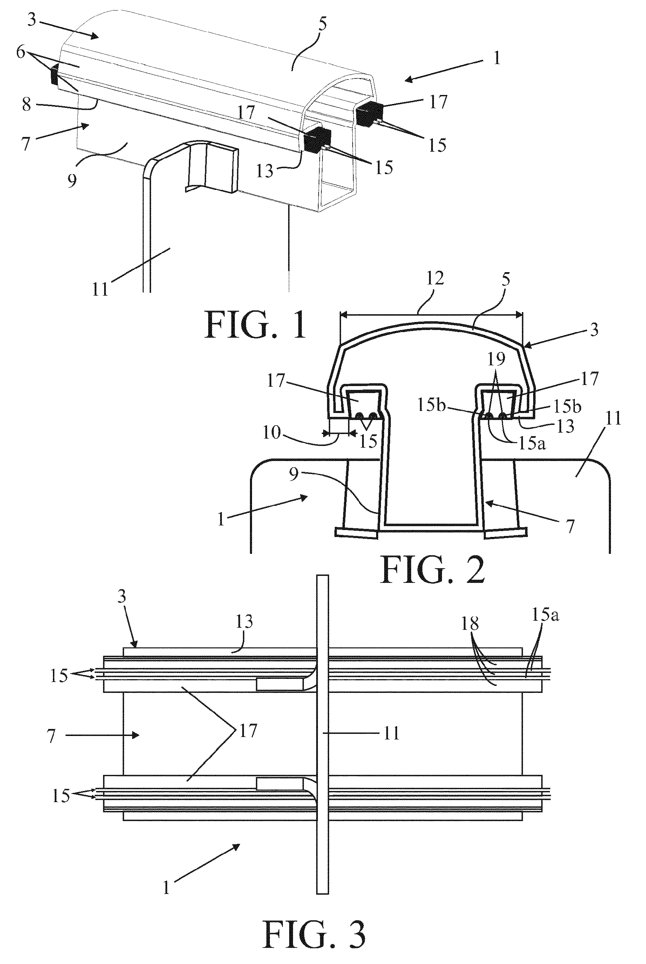

Figs. 1, 2 and 3 show a part of a first embodiment of the perch according to the invention in perspective view, cross-sectional view and bottom view respectively. The device comprises an elongated perch 1 having a substantiually T-shaped or mushroom-like cross section of which the top part forms the sitting section 3 and the top forms the sitting area 5 for the animals and of which the vertical section 7 is mounted on supports 11 and for this purpose is provided with a mounting face 9. Bird mites can thus crawl up to the sitting area and thus to the animals only via the supports and via the bottom of the sitting area.

On either side of the sitting area there are adjoining boundary areas 6 which are accessible to chickens and which they can reach with their beaks. Any bird mites present in these areas can therefore be eaten by the chickens.

In order to avoid the bird mites crawling up to the animals, two parallel spaced-apart electrical conductors 15 are located between the mounting face 9 and the adjoining boundary areas 6. These conductors have a non-insulated side 15a and extend along the entire boundary edge 8 of the boundary areas. The conductors are located as close to the boundary areas as possible from a point of view of construction engineering and thus enclose the sitting area 5 and the adjoining boundary areas 6. The distance 10 between the boundary areas 6 and the electrical conductors 15 is at any rate smaller than half the width 12 of the sitting area 5.

A voltage difference is created between the two electrical conductors during operation. The distance between the two electrical conductors is preferably smaller than the length of a bird mite to be combated, so that a bird mite that intends to crawl over the conductors to the animals resting on the perch simultaneously comes into contact with both conductors and is thus electrocuted. These electrical conductors 15 thus form a barrier around the mounting face 9 of the perch, so that bird mites cannot crawl to the sitting area of the perch via the perch supports. By fitting the conductors to the bottom 13 of the sitting section 3 it is avoided that the animals present on the perches come into contact with the conductors.

The electrical conductors 15 are located on the bottom 13 of the sitting section and are present with the non-insulated side pointing downwards, so that killed bird mites drop off the conductors. Moreover, for this purpose these non-insulated sides 15a are flat.

The electrical conductors 15 each have an elongated metal wire 19 that is enveloped in a sheath 15b of silicon rubber with particles therein of electrically conductive material and are embedded in a support 17 so that the non-insulated sides 15a of the conductors seamlessly connect with the sides 18 of the adjoining parts of the support.

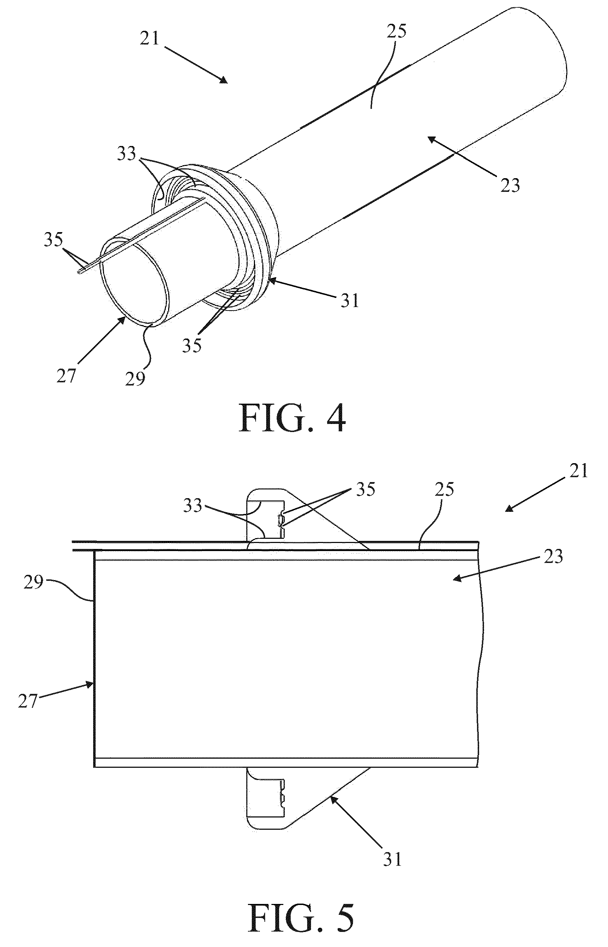

Figs. 4 and 5 show a part of a second embodiment of the device according to the invention in a perspective view and longitudinal section respectively. This device too has an elongated perch 21, this time having a round cross section of which the top part forms the sitting section 23 and the top forms the sitting area 25 for the animals to rest on and of which the axial end 27 forms the mounting face 29 by which the perch is fitted to a wall. In this way bird mites can crawl up to the seating area and thus to the animals only via the wall.

In order to prevent the bird mites from crawling up to the animals, electrical conductors 35 are fitted around the perch 21 close to the mounting face seen in cross-sectional view. Also as a result of this the bird mites can only reach the animals by crawling over the electrical conductors. So doing, the bird mites again simultaneously come into contact with both conductors, which leads to their electrocution. These electrical conductors thus again form a barrier around the mounting face 29 of the perch 21, so that bird mites cannot crawl via the wall to the sitting area of the perch.

The electrical conductors 35 are located between two upright walls 33 of a channel in an element 31 which is installed around the perch. This prevents the animals sitting on the perch from coming into contact with the condustors.

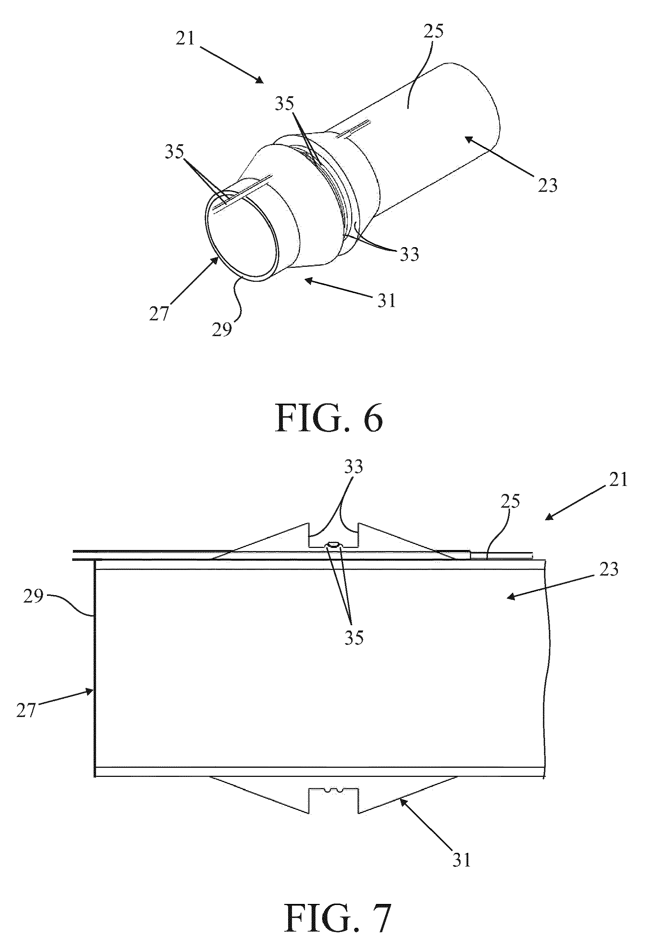

Figs. 6 and 7 show a variant of this embodiment in which the element 31 has a different design. The elements 31 shown in Figs. 4 to 7 can also be installed side by side on a perch so as to form a double barrier to the bird mites.

Albeit the invention has been elucidated in the foregoing with reference to the drawing figures, it should be set out that the invention is not by any manner or means restricted to the embodiment shown in the drawing figures. The invention also extends to any embodiments deviating from the embodiment shown in the drawing figures within the scope defined by the claims. In lieu of two spaced-apart non-insulated elongated electrical conductors, the perch may also be made of an electrically conductive material and function as earth, so that only a single conductor can suffice.

## Claims

1. A perch (1; 21) for poultry, comprising two elongated electrical conductors (15; 35) for combating bird mite, which perch is provided with an elongated sitting area (5; 25) for the poultry to sit on, as well as adjoining boundary areas (6) which the poultry can reach with their beaks, and a mounting face (9; 29) by which the perch can be fitted to a support (11) or wall, and which conductors have a non-insulated side (15a) and are spaced apart and parallel to each other, **characterized in that** the electrical conductors (15; 35) are located between the mounting face (9; 29) and the adjoining boundary areas (6) and close to these boundary areas and extend along the entire boundary edge of the boundary areas and thus enclose the sitting area (5; 25) and the adjoining boundary areas.

2. A perch (1; 21) as claimed in claim 1, **characterized in that** the distance (10) between the boundary areas (6) and the electrical conductors (15; 35) is smaller than half the width (12) of the sitting area (5; 25).

3. A perch (1; 21) as claimed in claim 1 or 2, **characterized in that** the electrical conductors (15; 35) are present with the non-insulated side (15a) facing downwards.

4. A perch (1; 21) as claimed in any one of the preceding claims, **characterized in that** the non-insulated side (15a) of the electrical conductors (15; 35) is flat.

5. A perch (1; 21) as claimed in any one of the preceding claims, **characterized in that** the electrical conductors (15; 35) are embedded in a support (17) so that the non-insulated sides (15a) of the conductors seamlessly connect with the sides of the adjoining parts of the support.

6. A perch (1; 21) as claimed in any one of the preceding claims, **characterized in that** the electrical conductors (15; 35) each comprise an elongated metal wire (19) in a sheath (15b) of plastic which contains particles of electrically conductive material.

## Patentansprüche

1. Sitzstange (1; 21) für Geflügel, die mit zwei langgestreckten Stromleitern (15; 35) zur Bekämpfung der Vogelmilbe versehen ist und über eine langgestreckte Sitzfläche (5; 25), auf der sich die Tiere niederlassen können, über angrenzende Randflächen (6), welche die Tiere mit dem Schnabel berühren können, und eine Montagefläche (9; 29) verfügt, mit der sich die Sitzstange an einer Stützkonstruktion (11) oder an einer Wand anbringen lässt, wobei die Stromleiter mit einer nicht isolierten Seite (15a) versehen und im Abstand sowie parallel zueinander angeordnet sind, **dadurch gekennzeichnet, dass** die Stromleiter (15; 35) zwischen der Montagefläche (9; 29) und den angrenzenden Randflächen (6) sowie in der Nähe dieser Randflächen angeordnet sind und sich entlang des gesamten Begrenzungsrandes der Randflächen erstrecken und so die Sitzfläche (5; 25) und die angrenzenden Randflächen einschließen.

2. Sitzstange (1; 21) nach Anspruch 1, **dadurch gekennzeichnet, dass** der Abstand (10) zwischen den Randflächen (6) und den Stromleitern (15; 35) weniger als die Hälfte der Breite (12) der Sitzfläche (5; 25) beträgt.

3. Sitzstange (1; 21) nach einem der Ansprüche 1 oder 2, **dadurch gekennzeichnet, dass** die nicht isolierte Seite (15a) der Stromleiter (15; 35) nach unten zeigt.

4. Sitzstange (1; 21) nach einem der vorangegangenen Ansprüche, **dadurch gekennzeichnet, dass** die nicht isolierte Seite (15a) der Stromleiter (15; 35) eben ist.

5. Sitzstange (1; 21) nach einem der vorangegangenen Ansprüche, **dadurch gekennzeichnet, dass** die Stromleiter (15; 35) so in einen Träger (17) eingebettet sind, dass ein nahtloser Übergang von den nicht isolierten Seiten (15a) der Stromleiter auf die Seiten der daneben befindlichen Teile des Trägers gegeben ist.

6. Sitzstange (1; 21) nach einem der vorangegangenen Ansprüche, **dadurch gekennzeichnet, dass** die Stromleiter (15; 35) jeweils einen langgestreckten Metalldraht (19) in einer Umhüllung (15b) aus Kunststoff umfassen, der Teilchen eines elektrisch leitenden Materials enthält.

## Revendications

1. Juchoir (1;21) pour volaille équipé de deux longs conducteurs électriques (15;35) destinés à combattre la dermanysse des volailles, lequel juchoir est une longue surface (5;25) sur laquelle la volaille peut percher, ainsi que des surfaces de rebord adjacentes (6) accessibles au bec de la volaille, et une surface de montage (9;29) permettant de fixer le juchoir à un support (11) ou à une paroi, et lesquels conducteurs sont équipés d'une face non isolée (15a) et sont espacés les uns des autres et sont les uns parallèles aux autres, avec comme caractéristique que les conducteurs électriques (15;35) se trouvent entre la surface de montage (9;29) et les surfaces de rebord adjacentes (6) et à proximité de ces surfaces de rebord adjacentes et s'étendent le long de la totalité des arêtes frontière des surfaces de rebord et ainsi enveloppent la surface où perche la volaille (5;25) et les surfaces de rebord adjacentes.

2. Juchoir (1;21) selon la revendication 1, **caractérisé en ce que** la distance (10) entre les surfaces de rebord (6) et les conducteurs électriques (15;35) est inférieure à la moitié de la largeur (12) de la surface où perche la volaille (5;25).

3. Juchoir (1;21) selon la revendication 1 ou 2, **caractérisé en ce qu'**il y a des conducteurs électriques (15;35) dont la face non isolée (15a) est orientée vers le bas.

4. Juchoir (1;21) selon l'une des revendications ci-avant, **caractérisé en ce que** la face non isolée (15a) des conducteurs électriques (15;35) est plate.

5. Juchoir (1;21) selon l'une des revendications ci-avant, **caractérisé en ce que** les conducteurs électriques (15;35) sont encastrés dans un support (17), de telle sorte que les faces non isolées (15a) des conducteurs correspondent parfaitement aux faces des parties du support adjacentes.

6. Juchoir (1;21) selon l'une des revendications ci-avant, **caractérisé en ce que** les conducteurs électriques (15;35) contiennent chacun un long fil métallique (19) dans une gaine (15b) plastique comportant de petites parties de conducteurs électriques.
